(19) Europäisches Patentamt
European Patent Office
Office européen des brevets

(11) EP 1 985 980 B1

# (12) EUROPÄISCHE PATENTSCHRIFT

(45) Veröffentlichungstag und Bekanntmachung des Hinweises auf die Patenterteilung:
**16.04.2014 Patentblatt 2014/16**

(51) Int Cl.:
***G01H 3/14*** *(2006.01)*

(21) Anmeldenummer: **08154677.2**

(22) Anmeldetag: **17.04.2008**

(54) **Verfahren und Vorrichtung zur Auswertung von auf eine Person wirkenden Schwingungen eines Fahrzeuges**

Method and apparatus for evaluating the vibrations of an automobile acting on a person

Dispositif et procédé d'évaluation d'oscillations d'un véhicule agissant sur une personne

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **23.04.2007 DE 102007019365**

(43) Veröffentlichungstag der Anmeldung:
**29.10.2008 Patentblatt 2008/44**

(73) Patentinhaber: **GRAMMER AG**
**92224 Amberg (DE)**

(72) Erfinder:
- **Meyder, Volkhart**
  **64658, Fürth/Odenwald (DE)**
- **Pankoke, Steffen Dr.-Ing.**
  **97387, Erlenbach (DE)**
- **Müller, Dieter**
  **97072, Würzburg (DE)**

(74) Vertreter: **Hannke, Christian**
**Hannke Bittner & Partner**
**Patent- und Rechtsanwälte**
**Prüfeninger Strasse 1**
**93049 Regensburg (DE)**

(56) Entgegenhaltungen:
**EP-A2- 1 481 841**
**EP-A2- 1 693 655**
**DE-A1-102004 053 812**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft ein Verfahren und eine Vorrichtung zur Auswertung von auf eine Person wirkende Schwingungen eines Fahrzeuges, wobei die Person einen vorzugsweise gefederten Fahrzeugsitz benutzt und Beschleunigungswerte mittels einer am Fahrzeugsitz angebrachten Detektionseinheit in x- y- und z-Richtungen in vorbestimmten Zeitabständen detektiert werden, gemäß den Oberbegriffen der Patentansprüche 8 und 1.

Es ist ein Verfahren zur Auswertung von auf eine Person wirkende Schwingungen eines Fahrzeugsitzes, wobei die Person einen Fahrzeugsitz des Fahrzeuges benutzt, beispielsweise aus DE 10 2004 061 574 A1 , oder DE 10 2004 053812 A1 bekannt. Das darin beschriebene Verfahren wendet einen Sensor zur Erfassung von Erschütterungen an, der als Beschleunigungssensor ausgebildet ist und mittig in einem Gehäuse angeordnet ist. Eine elektronische Einheit zur Auswertung der Messsignale ist in dem Gehäuse integriert. Die Auswertung der Messsignale der Sensoreinheit wird nicht näher beschrieben.

Bekannt ist, dass gemäß einer EU-Richtlinie Schwingungen, welche auf einen Fahrer eines Nutzfahrzeuges während des Betriebes des Nutzfahrzeuges wirken, während eines Arbeitstages erfasst werden müssen und zulässige Grenzwerte nicht überschritten werden dürfen. Dies ist in der Regel durch die Erfassung von Beschleunigungswerten, welche von den Schwingungen ausgehen, möglich, wobei die Beschleunigungswerte kumuliert werden und hierdurch ein stetig ansteigender Beschleunigungswert während der Zeitdauer einer Arbeitsschicht entsteht. Da ein Fahrer während einer Arbeitsschicht bisher nicht feststellen kann, ob er vor Ablauf des Endes der Arbeitsschicht voraussichtlich den zulässigen Maximalwert der kumulierten Beschleunigungswerte erreichen wird, kann der Fahrer auch nicht vorzeitig entsprechende Gegenmaßnahmen durch Einlegen einer Pause oder durch entsprechend anderes bzw. geändertes Fahrverhalten einleiten und durchführen.

Demzufolge liegt der vorliegenden Erfindung die Aufgabe zugrunde, ein Verfahren oder eine Vorrichtung zur Auswertung von auf eine Person wirkende Schwingungen eines Fahrzeuges, wobei die Person einen gefederten und gepolsterten Fahrzeugsitz benutzt, zur Verfügung zu stellen, welches/welche die Änderung eines Fahrverhaltens oder des Fahrzustandes zur Vermeidung eines frühzeitigen Erreichens eines Schwingungsgrenzwertes ermöglicht.

Diese Aufgabe wird verfahrensseitig durch die Merkmale des Patentanspruches 1 und vorrichtungsseitig durch die Merkmale des Patentanspruches 8 gelöst.

Ein wesentlicher Punkt der Erfindung liegt darin, dass bei einem Verfahren zur Auswertung von auf eine Person wirkende Schwingungen eines Fahrzeuges, wobei die Person einen vorzugsweise gefederten Fahrzeugsitz benutzt und Beschleunigungswerte mittels einer am Fahrzeugsitz angebrachten Detektionseinheit in x- y- und z-Richtungen in vorbestimmten Zeitabständen detektiert werden, eine zeitliche Zunahme der miteinander kumulierten Beschleunigungswerte bestimmt wird und daraus ein Zeitpunkt des voraussichtlichen Erreichens eines vorbestimmbaren und zulässigen Maximalwertes der kumulierten Beschleunigungswerte berechnet wird. Auf diese Weise ist es möglich, zu bestimmen, ob ein zulässiger Maximalwert vorzeitig, also vor Ablauf einer Arbeitsschicht von beispielsweise 8 Stunden aufgrund des momentanen bestehenden Schwingungsverhaltens des Fahrzeuges erreicht wird oder nicht. Sofern ein derartiges vorzeitiges Erreichen aufgrund der berechneten Zunahme möglich wäre, kann ein entsprechendes Warnsignal angezeigt bzw. akustisch wiedergegeben werden oder auch mittels einem Anzeigeschirm in seinem Verlauf dargestellt werden, um dem Fahrer die Gelegenheit zu geben, vorzeitig sein Fahrverhalten zu ändern, die Fahrstrecke zu wechseln oder rechtzeitig eine Pause einzulegen.

Gemäß einer bevorzugten Ausführungsform wird eine Restlaufzeit vom Zeitpunkt der Bestimmung der Zunahme bis zum Zeitpunkt des voraussichtlichen Ereignisses des Maximalwertes berechnet. Dies ermöglicht, dass durch einen Vergleich der berechneten Restlaufzeit mit der verbleiben Laufzeit einer vorbestimmten Minimalzeit, innerhalb welcher der zulässige Maximalwert der kumulierten Beschleunigungswerte noch nicht erreicht wird, verglichen werden kann und somit festgestellt wird, ob das Erreichen des zulässigen Maximalwertes erst nach Ablauf der Minimalzeitspanne stattfindet. Dies wird beispielsweise durch eine entsprechend ausgebildete Vergleichseinrichtung ermöglicht, die mittels Softwaregestaltung ihre Funktion durchführt und mit zusätzlichen Speichereinrichtungen, in welchen die berechneten und die vorgegebenen Zeit- und Beschleunigungswerte abgespeichert sind, verbunden ist. Ebenso kann eine derartige Vergleichseinrichtung zu jeder Zeit auslesbar und beschreibbar sein, um gegebenenfalls neue Werte einzugeben bzw. eine Änderung an den zulässigen Maximal- und Minimalwerten zuzulassen.

Zur Bestimmung der zeitlichen Zunahme der miteinander kumulierten Beschleunigungswerte werden ein erster kumulierter Beschleunigungswert zu einem ersten Zeitpunkt und ein späterer zweiter kumulierter Beschleunigungswert zu einem zweiten Zeitpunkt berechnet und eine Differenz zwischen dem zweiten und dem ersten Beschleunigungswert und eine Differenz zwischen dem zweiten und ersten Zeitpunkt berechnet, um die Steigung eines Kurvenabschnittes der kumulierten Beschleunigungswerte, die in einem Diagramm über die Zeit aufgetragen sind, zu bestimmen. Dies ermöglicht auf einfache Weise die Bestimmung der voraussichtlichen Restlaufzeit, bis der zulässige Maximalwert erreicht werden wird. Eine derartige Berechnung wird entweder auf Anfrage oder automatisiert, vorzugsweise mehrmals, durchgeführt, sodass eine darauf gerichtete Prognose, ob ein Maximalwert frühzeitig erreicht werden wird, jederzeit revidiert bzw. erneuert wird. Es liegt damit ein ständig angepasstes Ergebnis der berechneten Zunahmewerte und somit eine angepasste akustische und/oder optische Warnsignalaktivierung vor.

Eine derartige Warnsignalaktivierung kann auch durch eine Mehrzahl an Leuchtdioden oder durch eine einzelne Diode realisiert sein, indem eine Leuchtdiode aufleuchtet, sobald die Gefahr eines vorzeitigen Erreichens des Maximalwertes besteht. Ebenso kann entsprechend dem Grad der Steigung der Zunahme in dem Kurvenabschnitt eine ausgewählte Leuchtdiode aus einer Mehrzahl von Leuchtdioden angesteuert werden, sodass anhand der jeweils leuchtenden Leuchtdiode auf einfache und schnelle Weise für den Fahrer feststellbar ist, wie sehr die Gefahr und wie schnell ungefähr dieser Zustand eintreten wird, nämlich dass der Maximalwert vor Ablauf der Arbeitsschicht, die beispielsweise acht Stunden betragen kann, erreicht werden wird.

Jeder detektierte Beschleunigungswert wird mit einem Gewichtungsfaktor in Abhängigkeit von seiner Frequenz multipliziert und erhält somit eine unterschiedliche Frequenzgewichtung in seinem späteren kumulierten Berechnungszustand.

Jeder detektierte Beschleunigungswert kann gegebenenfalls mit einem zu berechnenden Richtungsfaktor multipliziert werden, um eine Korrektur des Beschleunigungswertes für dessen Zuweisung zu einer oder mehreren der x- y- und z-Richtungen zur erhalten. Dies ist insbesondere dann erforderlich, wenn die Vorrichtung an dem Fahrzeugsitz oder dergleichen nicht genau in x- y- und z-Richtung ausgerichtet ist, sodass zuvor eine Korrektur und damit eine Bestimmung derjenigen Beschleunigungswerte, die in x-, y- und z-Richtung verlaufen, notwendig ist.

Wenn ein kumulierter Beschleunigungswert bestimmt wird und dieser den Maximalwert überschreitet, findet eine Stopp-Anzeige statt. Dies kann mittels einer Aktivierung einer roten LED-Anzeige und/oder eines akustischen Signals erfolgen. Auf diese Weise weiß der Fahrer, dass nun wirklich der Maximalwert, welcher gemäß der EU-Richtlinie für das Schwingungsverhalten zulässig ist, endgültig erreicht worden ist und ein sofortiges Anhalten und Abschalten des Betriebszustandes des Fahrzeuges erforderlich ist. Andernfalls würde er gegen bestehende Vorschriften hinsichtlich der maximal zulässigen Schwingungswerte in derartigen Fahrzeugen, insbesondere Nutzfahrzeugen, verstoßen.

Eine Vorrichtung zur Durchführung eines Verfahrens, wie es zuvor beschrieben worden ist, weist vorteilhaft mindestens ein Gehäuse und einen darin angeordneten Beschleunigungssensor, der in X- y- und z-Richtung Beschleunigungswerte aufnehmen kann, sowie eine dazugehörige Auswerteinrichtung, die entweder direkt in dem Gehäuse oder in einem externen Gehäuse oder einem PC, mit dem das Vorrichtungsgehäuse verbunden werden kann, angeordnet ist, auf. Zudem weist eine derartige Vorrichtung vorteilhaft Speichereinrichtungen zum Speichern von Beschleunigungswerten, die gemessen worden sind oder vorgegeben sind und eine Steuereinrichtung zum Steuern der verschiedenen Komponenten innerhalb der Vorrichtung auf.

Weitere vorteilhafte Ausführungsformen ergeben sich aus den Unteransprüchen.

Vorteile und Zweckmäßigkeiten sind der nachfolgenden Beschreibung in Verbindung mit der Zeichnung zu entnehmen. Hierbei zeigen:

| | |
|---|---|
| Fig. 1 | in einer schematischen seitlichen Darstellung einen Fahrzeugsitz mit einer angedeuteten erfindungsgemäßen Vorrichtung und einer auf den Fahrzeugsitz sitzenden Person; |
| Fig. 2a, 2b | in einem Funktionsablaufdiagramm das erfindungsgemäße Verfahren gemäß einer Ausführungsform der Erfindung; |
| Fig. 3 | in einem Diagramm gemessene und kumulierte Beschleunigungswerte in zeitlicher Abhängigkeit und bei konstanter Arbeitsintensität; und |
| Fig. 4 | in einem Diagramm gemessene und kumulierte Beschleunigungswerte in zeitlicher Abhängigkeit bei schwankender Arbeitsintensität. |

In Fig. 1 ist in einer schematischen seitlichen Darstellung ein Fahrzeugsitz 1 mit einer darauf sitzenden Person 6 dargestellt, wobei der Fahrzeugsitz eine Rückenlehne 2 und ein Sitzpolster 3 mit einer Sitzpolsterfläche 3a, auf welcher die Person 6 sitzt, aufweist. Ein Fahrzeugsitzrahmen 4 dient dazu, dass Rückenlehnenpolster 2 und das Sitzpolster 3 zu stützen.

Auf einem vorzugsweise gefederten Fahrzeugsitzfuß 5 ist der Fahrzeugsitzrahmen 4 federnd angeordnet.

Ein andeutungsweise wiedergegebener Fahrzeugboden 7, auf welchem der Fuß 5 angeordnet ist, ist innerhalb eines die von der befahrenen Straße herrührenden Schwingungen erfahrenen Fahrzeuges, welches hier nicht näher dargestellt ist, angeordnet.

Eine Vorrichtung 8 zum Auswerten und Erfassen von derartigen Schwingungen ist unter Berücksichtigung der von dem gefederten Fuß 5 herrührenden Schwingung an dem Fahrzeugsitzgestell 4 angeordnet. Ebenso ist eine Armlehne 9 an dem Fahrzeugsitz 1 angeordnet.

Schwingungen werden von einem in dem in der Vorrichtung 8 nicht näher dargestellten Beschleunigungssensor in den drei Hauptrichtungen gemessen, also in x-Richtung 10a, in y-Richtung 10b und in z-Richtung 10c.

In Fig. 2a und 2b ist in einem Funktionsablauf das erfindungsgemäße Verfahren in einzelnen Schritten näher dargestellt. Diesem Funktionsablaufdiagramm kann entnommen werden, dass in einem ersten Schritt 11 eine Erfassung der auf die Vorrichtung 8 bzw. dem Operator einwirkenden Schwingungen in festen Intervallen $\Delta t$ stattfindet. Eine derartige Verfassung wird demzufolge regelmäßig durchgeführt.

In einem Schritt 12 findet eine Frequenzrichtung und die Applikation eines Richtungsfaktors auf die detektierten bzw. erfassten Schwingungswerte und somit auf die Beschleunigungswerte statt. Es wird eine Aufzeichnung der einzelnen Beschleunigungswerte $a_{WID}$, wie es in den Figuren 3 und 4 wiedergegeben wird, in zeitlicher Abfolge durchgeführt.

In einem Schritt 13 wird eine sogenannte momentane Ausnutzung $A(T_i)$ des maximal zulässigen Expositionswertes A(8) der laufenden Schicht gemäß der Formel bestimmt:

$$A(T_i) = \sqrt{\frac{i \cdot \Delta t}{8h}} \cdot \sqrt{\sum_{i=1}^{N} (a_{wi})^2}$$

N ist die Anzahl der gemessenen Beschleunigungswerte;

$a_{wi}$ sind die detektierten Beschleunigungswerte;

$\Delta$ t sind die Zeitintervalle, nach welchen eine Messung des Beschleunigungswertes stattfindet;

8h steht für eine Arbeitsschicht von acht Stunden.

In einem Schritt 14 wird festgestellt, ob die momentane Ausnutzung $A(T_i)$ eines zulässigen Expositionswertes von A(8) übersteigt. Sofern dies der Fall ist, findet eine Stopp-Anzeige gemäß Bezugzeichen 15 statt. Sofern dies jedoch nicht der Fall ist, wird in einem Schritt 16 die momentane Zunahme $\Delta A$ der Ausnutzung aus $A(T_i)$ und $A(T_{i-1})$ bestimmt.

Anschließend wird in einem Schritt 17 eine Prognose über die Restlaufzeit $t^{max}$, welche die maximal noch mögliche Restlaufzeit bis zum Erreichen des zulässigen Maximalexpositonswertes A(8) darstellt, aus der Zunahme von $\Delta A$, der Ausnutzung $A(T_i)$ und dem Grenzwert A(8) bestimmt.

In einem Schritt 18 findet eine Abfrage statt, ob ein Schichtende innerhalb der berechneten Restlaufzeit $t^{max}$ erreicht werden wird. Sofern dies der Fall ist, wird gemäß einem Schritt 19 eine grüne Anzeige aufleuchten, die den Aussagegehalt hat: "mit momentaner Arbeitsintensität kann bis Schichtende weitergearbeitet werden".

Wenn das Schichtende nicht innerhalb der berechneten Restlaufzeit $t^{max}$ werden wird, so findet eine gelbe Anzeige gemäß Schritt 20 statt, die besagt, dass "bei Fortdauer der momentanen Arbeitsintensität der Expositionsgrenzwert vor Schichtende überschritten werden wird".

In Fig. 3 ist in einem Diagramm die Beschleunigung über die Ordinate 21 und die Zeitabstände über die Abszisse 22 aufgetragen. Bei den in Fig. 3 wiedergegebenen Beschleunigungswerten handelt es sich um gemessene Beschleunigungswerte $a_{WID}$ 23 während einer konstanten Arbeitsintensität, die bei ca. 1,4 m/s$^2$ liegen.

Die sich daraus ergebene zu kumulierenden Beschleunigungswerte $a_{w0}$ ergeben eine Kurve 24, wie sie in Fig. 3 dargestellt ist.

In Fig. 4 ist bei schwankender Arbeitsintensität, also mit unterschiedlich starker Schwingungseinwirkung von Bodenwellen und dergleichen auf das Nutzfahrzeug und damit auf die den Fahrzeugsitz benutzende Person eine Auftragung der detektierten Beschleunigungswerte $a_{WID}$ über die Ordinate 25 in Abhängigkeit von zeitlichen Abständen auf der Abszisse 26 aufgetragen. Die zeitlichen Abstände betragen jeweils 10 min pro angezeigtes Zeitintervall, sodass sich hieraus eine Gesamtzeit von acht Stunden ergibt.

Die einzelnen detektierten Beschleunigungswerte $a_{WID}$ können ober- oder unterhalb eines zulässigen Maximalwertes 29 liegen, wobei entscheidend ist, dass dieser Maximalwert 29 nicht von den kumulierten Beschleunigungswerten $a_{w0}$ mit dem Bezugszeichen 28 erreicht wird. Hierfür werden die einzelnen detektierten Beschleunigungswerte 27 laufend miteinander kumuliert um eine Kurve 28 der kumulierten Beschleunigungswerte zu erhalten.

In einem Kurvenabschnitt wird eine Messung zur Bestimmung der Zunahme der kumulierten Beschleunigungswerte durchgeführt, wie es durch einen Steigungsabschnitt 30, der gemittelt ist, wiedergegeben ist. Hierfür wird zu einem ersten Zeitpunkt 31a ein erster kumulierter Beschleunigungswert 32a festgestellt. Zu einem zweiten Zeitpunkt 31b wird ein zweiter Beschleunigungswert 32b bestimmt. Anschließend werden Differenzen 31 und 32 aus dem Beschleunigungswerten und den Zeitpunkten berechnet, um somit die Steigung 30 zwischen den jeweiligen beiden Punkten zu bestimmen. Diese Steigung ermöglicht eine Aussage darüber, ob bei gleichbleibenden Steigungsgrad eine unbeabsichtigte vorzeitige Überschreitung des zulässigen Maximalwertes 29 erhalten werden wird, bevor ein 8-Stundentakt abgelaufen ist. Dies kann mittels Warnsignale angezeigt bzw. akustisch dargestellt werden.

Sämtliche in den Anmeldungsunterlagen offenbarten Merkmale werden als erfindungswesentlich beansprucht, sofern sie einzeln oder in Kombination gegenüber dem Stand der Technik neu sind.

**Bezugszeichenliste**

| | |
|---|---|
| 1 | Fahrzeugsitz |
| 2 | Rückenlehne |
| 3 | Sitzpolster |
| 3a | Sitzpolsterfläche |
| 4 | Fahrzeugsitzrahmen |
| 5 | Fahrzeugsitzfuß |
| 6 | Person |

| | |
|---|---|
| 7 | Fahrzeugboden |
| 8 | Vorrichtung |
| 9 | Armlehne |
| 10a | x-Richtung |
| 10b | y-Richtung |
| 10c | z-Richtung |
| 11 - 14 | Schritt |
| 15 | Stopp-Anzeige |
| 16 - 20 | Schritt |
| 21 | Ordinate |
| 22 | Abszisse |
| 23 | Beschleunigungswert $a_{WID}$ |
| 24 | Kurve |
| 25 | Ordinat |
| 26 | Abszisse |
| 27 | detektierten Beschleunigungswerte |
| 28 | Beschleunigungswerten $a_{w0}$ |
| 29 | Maximalwert |
| 30 | Steigungsabschnitt |
| 31a, b | Zeitpunkt |
| 32a | erster Beschleunigungswert |
| 32b | zweiter Beschleunigungswert |
| 31, 32 | Differenz |
| $\Delta t$ | Zeitintervall |
| $a_{WID}$ | detektierte Beschleunigungswerte |
| $a_{w0}$ | kummulierte Beschleunigungswerte |
| $A(T_i)$, $A(T_{i-1})$ | Ausnutzungswerte |
| $t^{max}$ | Restlaufzeit |
| A(8) | Expositionswerte |
| $\Delta A$ | momentane Zunahme der Ausnutzung |

**Patentansprüche**

1. Vorrichtung zur Durchführung eines Verfahrens zur Auswertung von auf eine Person (6) wirkende Schwingungen eines Fahrzeuges, wobei die Person (6) einen vorzugsweise gefederten Fahrzeugsitz (1) benutzt und Beschleunigungswerte (27) mittels einer am Fahrzeugsitz (1) angebrachten Detektionseinheit (8) in x- y- und z-Richtungen (10a- 10c) in vorbestimmten Zeitabständen detektierbar sind (11),
**dadurch gekennzeichnet, dass**
die Vorrichtung mindestens ein Gehäuse und einen darin angeordneten Beschleunigungssensor sowie eine dazugehörige Auswerteeinrichtung zur Durchführung der Bestimmung einer zeitlichen Zunahme der miteinander kumulierten Beschleunigungswerte, wobei zur Bestimmung einer zeitlichen Zunahme der miteinander kumulierten Beschleunigungswerte ein erster kumulierter Beschleunigungswert (32a) zu einem ersten Zeitpunkt (31a) und ein späterer zweiter kumulierter Beschleunigungswert (32b) zu einem zweiten Zeitpunkt (31 b) berechnet werden und eine Differenz (32) zwischen dem zweiten und dem ersten Beschleunigungswert und eine Differenz (31) zwischen dem zweiten und ersten Zeitpunkt berechnet werden, um die Steigung (30) eines Kurvenabschnitts der kumulierten Beschleunigungswerte, die in einem Diagramm über die Zeit aufgetragen sind, zu bestimmen, aufweist.

2. Vorrichtung nach Anspruch 1,
**dadurch gekennzeichnet, dass**
dass eine Restlaufzeit vom Zeitpunkt der Bestimmung der Zunahme bis zum Zeitpunkt des voraussichtlichen Erreichens des Maximalwertes berechenbar ist (17).

3. Vorrichtung nach Anspruch 2,
**dadurch gekennzeichnet, dass**
die berechnete Restlaufzeit mit der verbleibenden Laufzeit einer vorbestimmten Minimalzeitspanne, innerhalb welcher der zulässige Maximalwert der kumulierten Beschleunigungswerte noch nicht erreicht wird, vergleichbar ist (18).

4. Vorrichtung nach Anspruch 3
**dadurch gekennzeichnet, dass**,
wenn die Restlaufzeit geringer als die verbleibende Laufzeit der Minimalzeitspanne ist, eine Warnanzeige (20) aktivierbar ist.

5. Vorrichtung nach einem der vorangegangenen Ansprüche,
**dadurch gekennzeichnet, dass**
jeder detektierte Beschleunigungswert mit einem Gewichtungsfaktor in Abhängigkeit von seiner Frequenz multiplizierbar ist (12).

6. Vorrichtung nach einem der vorangegangenen Ansprüche,
**dadurch gekennzeichnet, dass**
jeder detektierte Beschleunigungswert gegebenenfalls mit einem zu berechnenden Richtungsfaktor multiplizierbar ist (12), um eine Korrektur des Beschleunigungswertes für dessen Zuweisung zu einer oder mehreren der x- y- und z-Richtungen (10a - 10c) zu erhalten.

7. Vorrichtung nach einem der vorangegangenen Ansprüche,
**dadurch gekennzeichnet, dass**
wenn ein kumulierter Beschleunigungswert bestimmt wird und dieser den Maximalwert (29) überschreitet, eine Stopp-Anzeige (15) aktivierbar ist.

8. Verfahren zur Auswertung von auf eine Person (6) wirkende Schwingungen eines Fahrzeuges mittels einer Vorrichtung gemäß einer der vorangegangenen Ansprüche, wobei die Person (6) einen vorzugsweise gefederten Fahrzeugsitz (1) benutzt und Beschleunigungswerte (27) mittels einer am Fahrzeugsitz (1) angebrachten Detektionseinheit (8) in x- y- und z-Richtungen (10a - 10c) in vorbestimmten Zeitabständen detektiert werden (11),
**dadurch gekennzeichnet, dass**
eine zeitliche Zunahme der miteinander kumulierten Beschleunigungswerte (28) bestimmt wird (16) und daraus ein Zeitpunkt des voraussichtlichen Erreichens eines vorbestimmbaren und zulässigen Maximalwertes (29) der kumulierten Beschleunigungswerte (28) berechnet wird, wobei
zur Bestimmung der zeitlichen Zunahme der miteinander kumulierten Beschleunigungswerte ein erster kumulierter Beschleunigungswert (32a) zu einem ersten Zeitpunkt (31 a) und ein späterer zweiter kumulierter Beschleunigungswert (32b) zu einem zweiten Zeitpunkt (31 b) berechnet werden und eine Differenz (32) zwischen dem zweiten und dem ersten Beschleunigungswert und eine Differenz (31) zwischen dem zweiten und ersten Zeitpunkt berechnet werden, um die Steigung (30) eines Kurvenabschnitts der kumulierten Beschleunigungswerte, die in einem Diagramm über die Zeit aufgetragen sind, zu bestimmen, wobei die Steigung (30) eine Aussage darüber ermöglicht, ob bei gleichbleibender Steigung (30) eine unbeabsichtigte vorzeitige Überschreitung des zulässigen Maximalwertes (29) erhalten werden wird.

## Claims

1. Apparatus for implementing a method for analyzing vibrations of a automobile acting on a person (6), wherein the person (6) is using a preferably sprung automobile seat (1), and acceleration values (27) by means of a detection unit (8) fitted to the automobile seat (1) in the x, y, and z-axes (10a-10c) at preset intervals of time (11) are detectable, **characterized in that** the apparatus has at least one casing und an acceleration detector arranged therein as well as an associated analysis device to conduct the determination of an increase of acceleration values cumulated with one another over time, wherein for the determination of an increase of cumulated acceleration values over time, a first cumulative acceleration value (32a) at a first point of time (31a) and a second cumulative acceleration value (32b) at a second point in time are calculated and a difference (32) between the second and first acceleration value point in time and a difference (31) between the second and first point in time is calculated to determine the rise (30) of a section of curve of the cumulative acceleration values entered in a diagram over time.

2. Apparatus as in claim 1, **characterized in that** a residual running time is determined from the time when the increase is determined until the time when the maximum is expected to be reached.

3. Apparatus as in claim 2, **characterized in that** the estimated residual running time is compared with the remaining running time of a preset minimum period of time within which the cumulative acceleration value will not yet reach their permitted maximum.

4. Apparatus as in claim 3, **characterized in that** a warning display (20) is activated if the residual running time is less than the remaining running time of the minimum time.

5. Apparatus as in any of the claims above, **characterized in that** each detected acceleration value is multiplied by a weighting factor as a function of its frequency.

6. Apparatus as in any of the claims above, **characterized in that** each detected acceleration value is multiplied, if necessary, by a correct factor to be calculated (12) to obtain a corrected acceleration value for assigning it to one or more of the x-, y- and z-axes (10a-10c).

7. Apparatus as in any of the claims above, **characterized in that** a stop display (15) is activated, if a cumulative acceleration value is determined and this exceeds the maximum (29).

8. Method for analyzing vibrations of a automobile acting on a person (6) by means of an apparatus as in any of the claims above, whereby the person (6) is using a preferably sprung automobile seat (1), and acceleration values (27) by means of a detection unit (8) fitted to the automobile seat (1) in the x-, y- and z-axes (10a-10c) at preset intervals of time (11) are detected, **characterized in that** an increase of the cumulated acceleration values (28) is determined (16) over time, and a time calculated from this when a pre-determinable permitted maximum (29) of the cumulated acceleration values (28) will foreseeably be reached, wherein for determination how the acceleration values cumulated with one another increase over time is calculated at a first point in time (31a) and second cumulative acceleration value (32b) at a second point in time, and a difference (32) between the second and first acceleration value and the difference (31) between the second and first point in time is calculated to determine the rise (30) of a section of curve of the cumulative acceleration values entered in a diagram over time, wherein the rise (30) makes it possible to say whether, if this rise (30) continues, the permitted maximum (29) will be exceeded ahead of time.

## Revendications

1. Dispositif de réalisation d'un procédé d'analyse de vibrations d'un véhicule agissant sur une personne (6), la personne (6) utilisant un siège de véhicule (1), de préférence à suspension, et des valeurs d'accélération (27) pouvant être détectées (11) à l'aide d'une unité de détection (8) disposée sur le siège du véhicule (1) dans des directions x, y et z (10a-10c) à des intervalles de temps prédéterminés, **caractérisé en ce que** le dispositif comprend au moins un boîtier et un capteur d'accélérations disposé à l'intérieur ainsi qu'un dispositif d'analyse associé pour la réalisation de la détermination d'une augmentation en fonction du temps des valeurs d'accélération cumulées les unes aux autres, une première valeur d'accélération cumulée (32a) à un premier instant (31 a) et une seconde valeur d'accélération cumulée (32b) ultérieure, à un second instant (31 b), étant calculées et une différence (32) entre la première et la seconde valeur d'accélération et une différence (31) entre le premier et le second instant étant calculées afin de déterminer la progression vers le haut (30) d'un segment de courbe des valeurs d'accélération cumulées, qui sont reportées au fur et à mesure du temps sur un diagramme.

2. Dispositif selon la revendication 1, **caractérisé en ce qu'** un temps résiduel allant de l'instant de détermination de l'augmentation jusqu'à l'instant prévisible où la valeur maximale est atteinte, peut être calculé (17).

3. Dispositif selon la revendication 2, **caractérisé en ce que** le temps résiduel calculé peut être comparé (18) avec le temps restant d'une période de temps minimale prédéterminée, dans laquelle la valeur maximale admissible des valeurs d'accélération cumulées n'est pas encore atteinte.

4. Dispositif selon la revendication 3, **caractérisé en ce que** lorsque le temps résiduel est inférieur au temps restant de la période de temps minimale, un affichage d'avertissement (20) peut être activé.

5. Dispositif selon l'une des revendications précédentes, **caractérisé en ce que** chaque valeur d'accélération détectée peut être multipliée (12) par un facteur de pondération en fonction de sa fréquence.

6. Dispositif selon l'une des revendications précédentes, **caractérisé en ce que** chaque valeur d'accélération détectée peut être multipliée (12), le cas échéant, par un facteur de direction à calculer, afin d'obtenir une correction de la valeur d'accélération en l'associant à une ou plusieurs des directions x, y et z (10a-10c).

7. Dispositif selon l'une des revendications précédentes, **caractérisé en ce que** lorsqu'une valeur d'accélération cumulée est déterminée et dépasse la valeur maximale (29), un affichage d'arrêt (15) peut être activé.

8. Procédé d'analyse de vibrations d'un véhicule agissant sur une personne (6) à l'aide d'un dispositif selon une des revendications précédentes, la personne (6) utilisant un siège de véhicule (1), de préférence à suspension, et des valeurs d'accélération (27) étant détectées (11) à l'aide d'une unité de détection (8) disposée sur le siège de véhicule (1) dans les directions x, y et z (10a-10c) à des intervalles de temps prédéterminés, **caractérisé en ce qu'** une augmentation en fonction du temps des valeurs d'accélération cumulées (28) est déterminée (16) et un instant où une valeur maximale admissible (29) des valeurs d'accélération cumulées (28) peut être atteinte de manière prévisible est calculé, une première valeur d'accélération cumulée (32a) à un premier instant (31 a) et une seconde valeur d'accélération cumulée (32b) ultérieure à un second instant (31 b) étant calculées et une différence (32) entre la première et la seconde valeur d'accélération et une différence (31) entre le premier et le second instant étant calculées afin de déterminer la progression vers le haut (30) d'un segment de courbe des valeurs d'accélération cumulées, qui sont reportées au fur et à mesure du temps sur un diagramme, la progression vers le haut (30) permettant de déterminer si, dans le cas d'une progression vers le haut constante (30), on obtient un dépassement prématuré imprévu de la valeur maximale admissible (29).

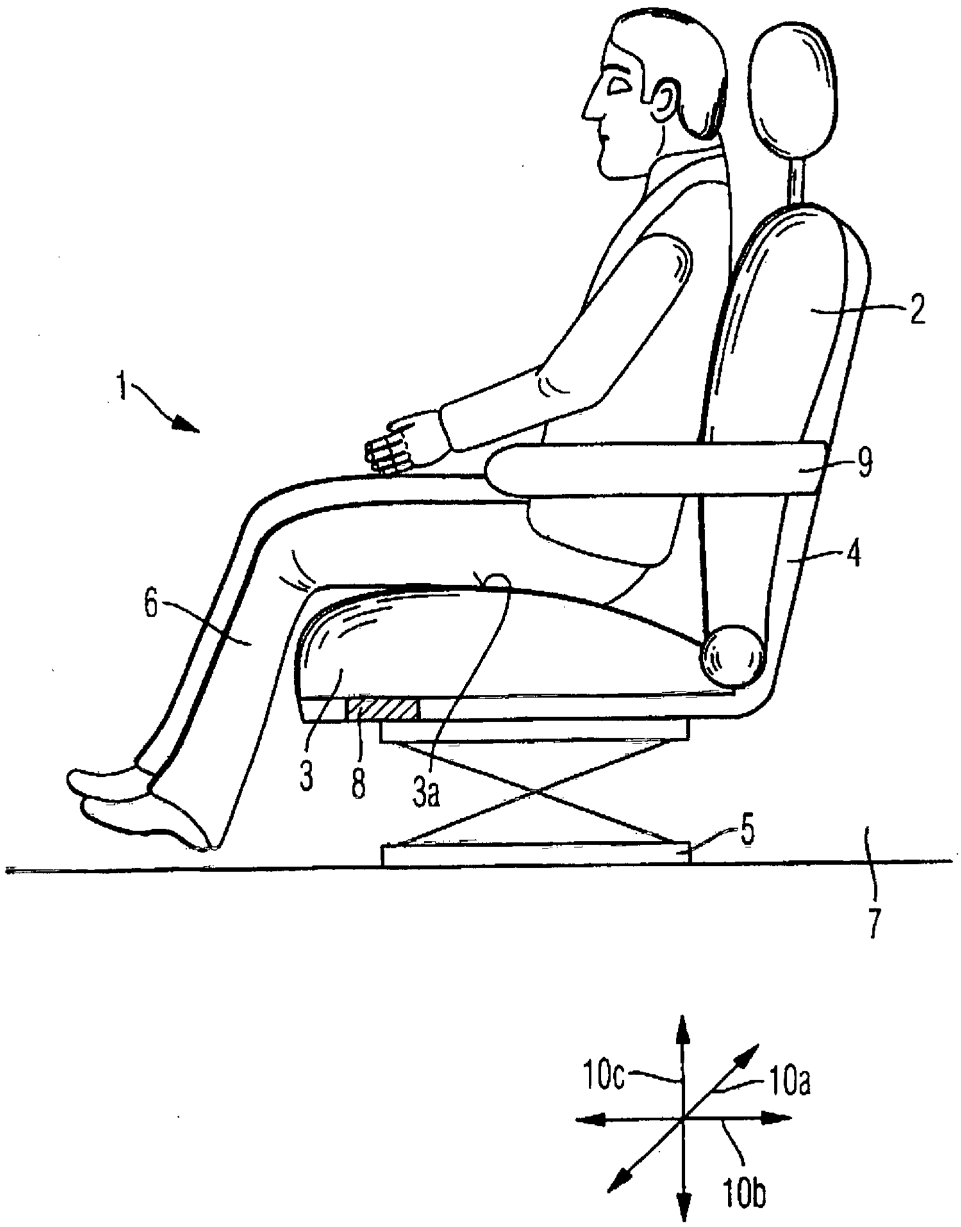


Fig. 1

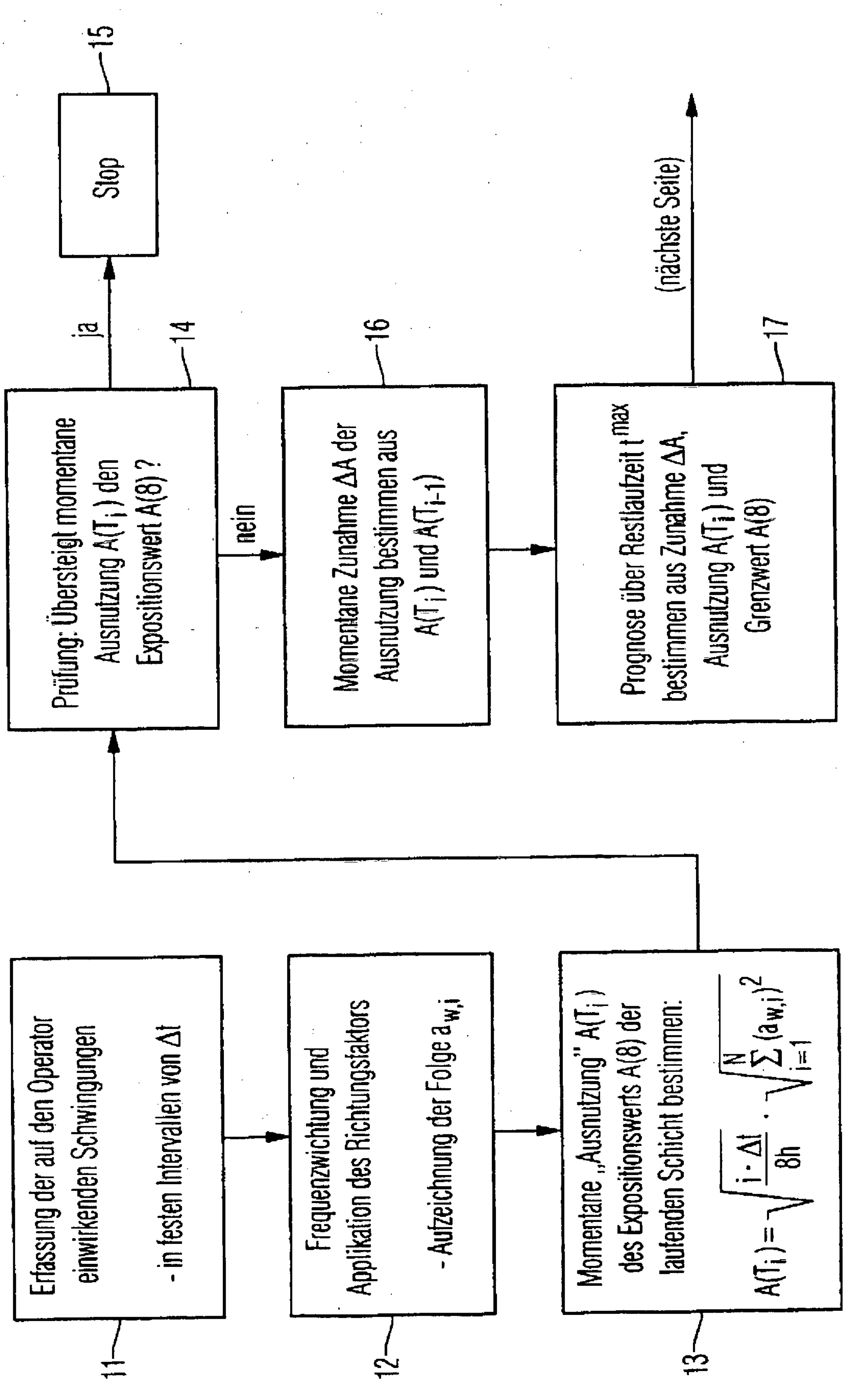
Erfassung der auf den Operator einwirkenden Schwingungen
- in festen Intervallen von Δt
11
Frequenzwichtung und Applikation des Richtungsfaktors
- Aufzeichnung der Folge $a_{w,i}$
12
Momentane „Ausnutzung" $A(T_i)$ des Expositionswerts A(8) der laufenden Schicht bestimmen:
$A(T_i) = \sqrt{\frac{i \cdot \Delta t}{8h}} \cdot \sqrt{\sum_{i=1}^{N} (a_{w,i})^2}$
13
Prüfung: Übersteigt momentane Ausnutzung $A(T_i)$ den Expositionswert A(8) ?
14
ja
Stop
15
nein
Momentane Zunahme ΔA der Ausnutzung bestimmen aus $A(T_i)$ und $A(T_{i-1})$
16
Prognose über Restlaufzeit $t^{max}$ bestimmen aus Zunahme ΔA, Ausnutzung $A(T_i)$ und Grenzwert A(8)
17
(nächste Seite)

Fig. 2a

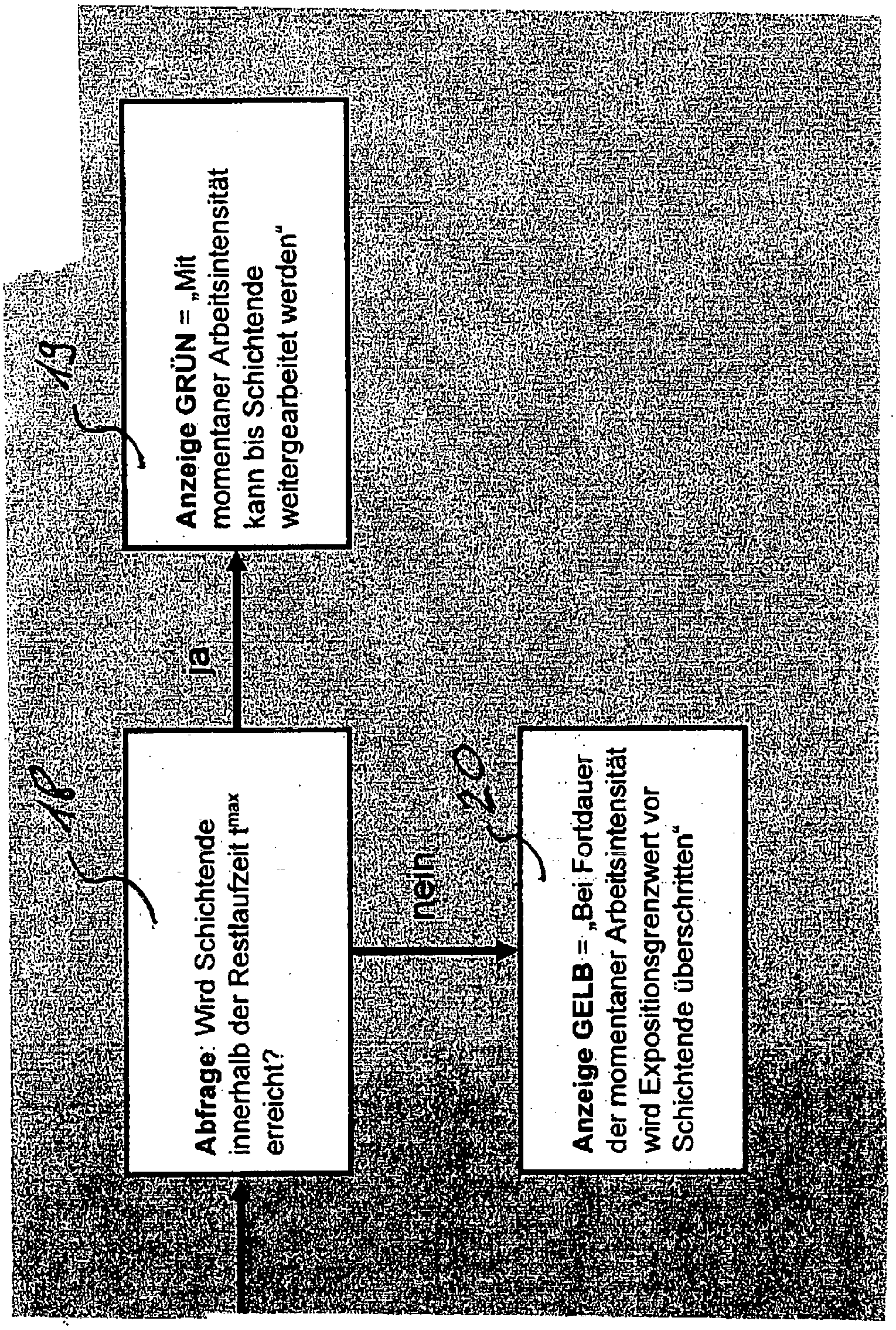
18
Abfrage: Wird Schichtende innerhalb der Restlaufzeit $t^{max}$ erreicht?
ja
19
Anzeige GRÜN = „Mit momentaner Arbeitsintensität kann bis Schichtende weitergearbeitet werden“
nein
20
Anzeige GELB = „Bei Fortdauer der momentaner Arbeitsintensität wird Expositionsgrenzwert vor Schichtende überschritten“

Fig 2b

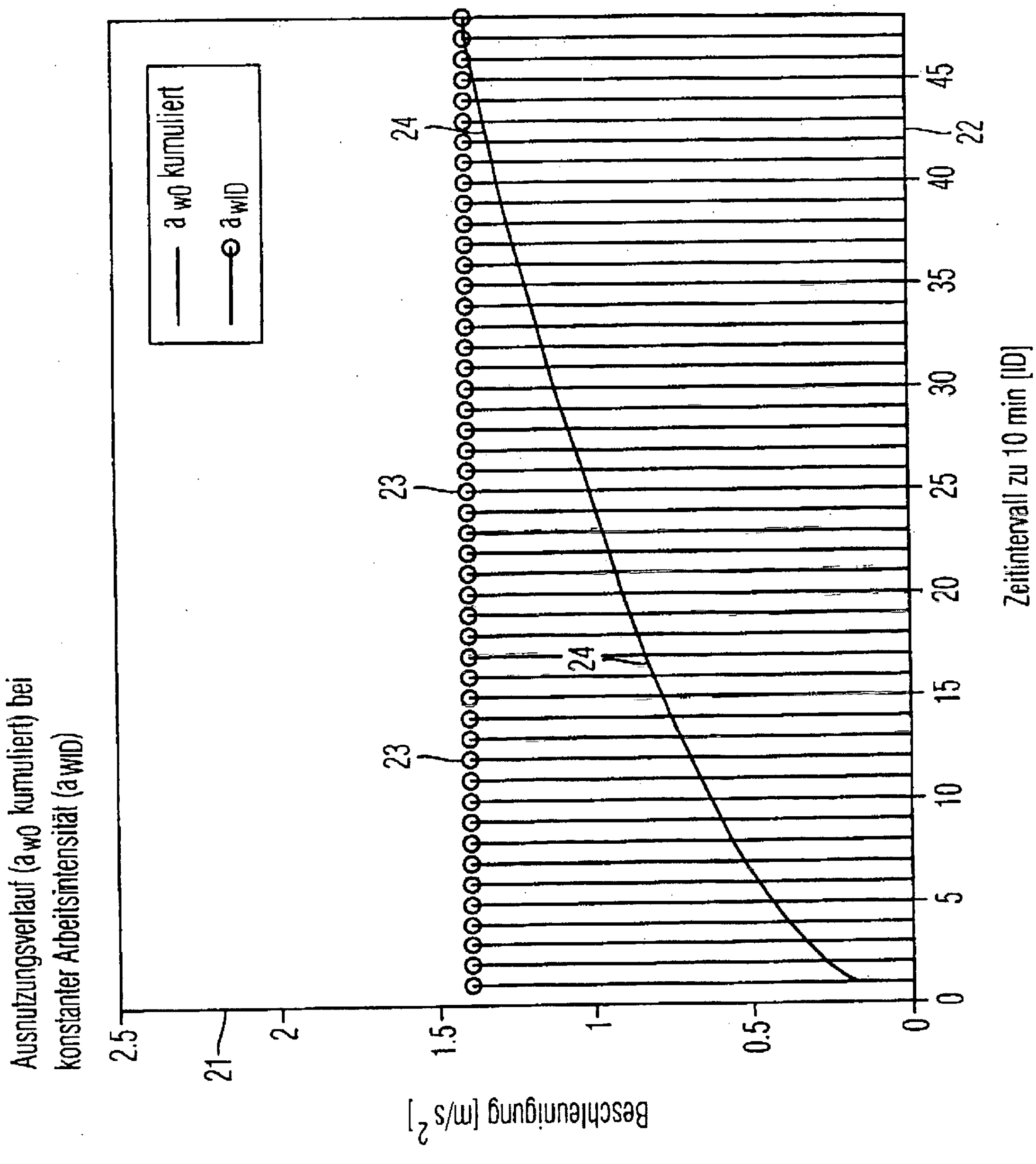
Ausnutzungsverlauf ($a_{w0}$ kumuliert) bei konstanter Arbeitsintensität ($a_{wID}$)
$a_{w0}$ kumuliert
$a_{wID}$
Beschleunigung [m/s$^2$]
Zeitintervall zu 10 min [ID]
0
0.5
1
1.5
2
2.5
0
5
10
15
20
25
30
35
40
45
21
22
23
23
24
24

Fig. 3

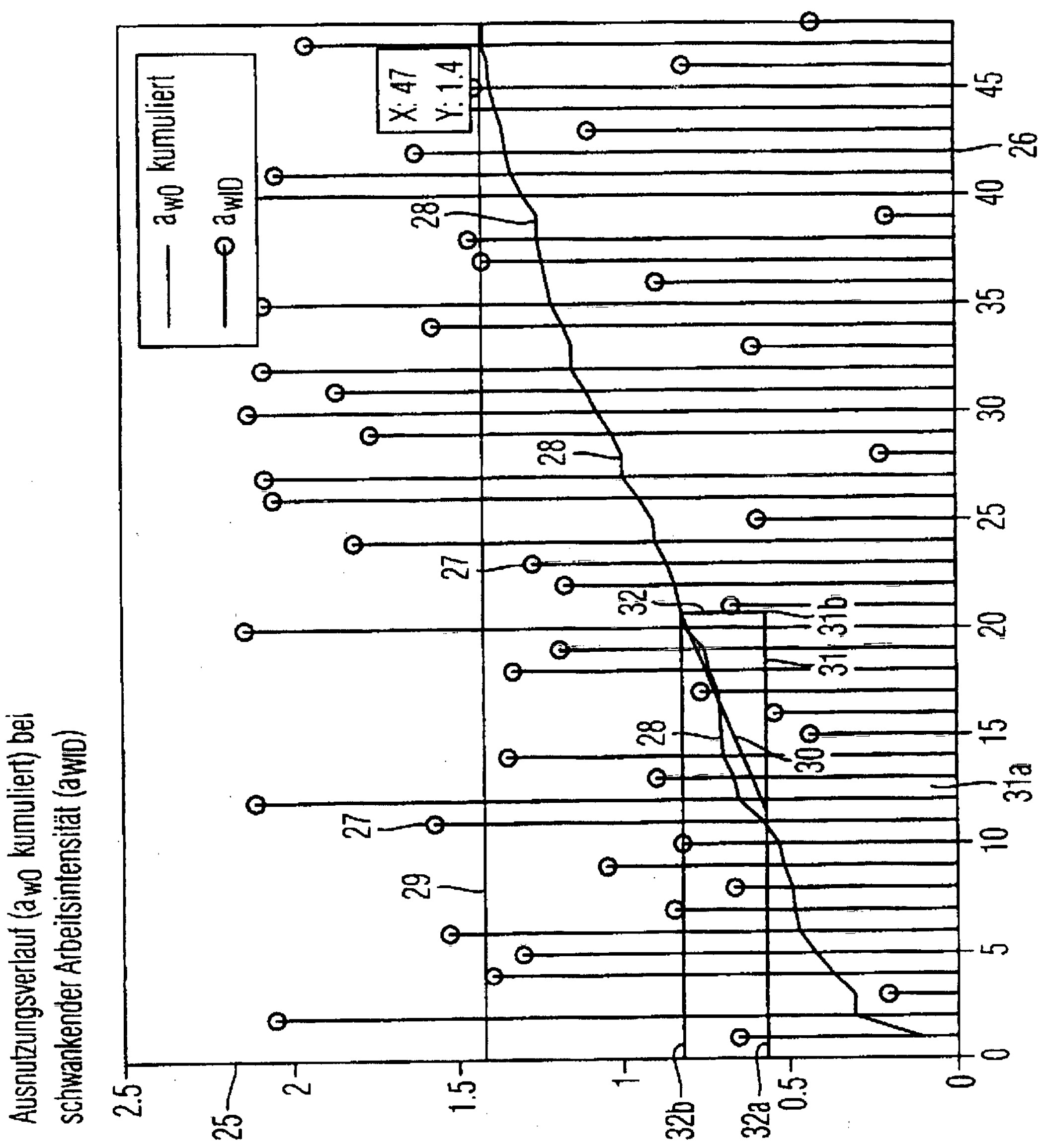
Ausnutzungsverlauf ($a_{w0}$ kumuliert) bei schwankender Arbeitsintensität ($a_{wID}$)
$a_{w0}$ kumuliert
$a_{wID}$
X: 47
Y: 1.4
Beschleunigung [m/s²]
Zeitintervall zu 10 min [ID]
2.5
2
1.5
1
0.5
0
5
10
15
20
25
30
35
40
45
25
26
27
28
29
30
31
31a
31b
32
32a
32b

Fig. 4

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 102004061574 A1
- DE 102004053812 A1